# EUROPÄISCHE PATENTANMELDUNG

(11) **EP 2 020 576 A2**
(43) Veröffentlichungstag der Anmeldung: **04.02.2009**
(21) Anmeldenummer: 08161712.8
(22) Anmeldetag: 04.08.2008
(51) Int. Cl.: F24J 2/24, F24J 2/46

(54) **Solarkollektor zum Erwärmen einer Flüssigkeit**

(30) Priorität: 03.08.2007 DE 102007036749
(71) Anmelder: Roos Freizeitanlagen GmbH, 63674 Altenstadt (DE)
(72) Erfinder: Roos, Franz, 63674, Altenstadt (DE)
(74) Vertreter: Staudt, Armin Walter

(57) **Zusammenfassung**

Bei einem bekannten Solarkollektor (1) zum Erwärmen einer Flüssigkeit sind Verteilerrohre (3,4) aus Kunststoff zur Zu- und Ableitung der zu erwärmenden Flüssigkeit vorgesehen, die jeweils eine Verteilerrohr-Wandung aufweisen, über deren Länge eine Vielzahl von Rohranschlussstutzen (11) aus Kunststoff für den Anschluss von Kollektorrohren verteilt sind, welche die Verteilerrohre miteinander verbinden. Um einen derartigen Solarkollektor im Hinblick auf Montagefreundlichkeit, Frostbeständigkeit bei gleichzeitig hoher Ermüdungsfestigkeit zu optimieren, wird erfindungsgemäß vorgeschlagen, dass die Wandung mindestens eines der Verteilerrohre (3,4) mit einem Wellprofil versehen ist, und dass die Rohranschlussstutzen (11) integraler Bestandteil dieses Verteilerrohres (3,4) sind.

## Beschreibung

Die vorliegende Erfindung betrifft einen Solarkollektor zum Erwärmen einer Flüssigkeit, umfassend mindestens zwei Verteilerrohre aus Kunststoff zur Zu- und Ableitung der zu erwärmenden Flüssigkeit, die jeweils eine Verteilerrohr-Wandung aufweisen, über deren Länge eine Vielzahl von Rohranschlussstutzen aus Kunststoff für den Anschluss von Kollektorrohren verteilt sind, welche die Verteilerrohre miteinander verbinden.

### Stand der Technik

Derartige Solarkollektoren werden in unterschiedlichen Ausführungsformen zur Erwärmung des Wassers von Schwimmbädern, fest installierter oder frei aufstellbarer Schwimmbecken, Kinderpools im Innen- oder Außenbereich, Gartenduschen und dergleichen eingesetzt. Der Solarkollektor wird vom zu erwärmenden Wasser kontinuierlich durchströmt, wobei der Wasserstrom Wärme aus dem Solarkollektor aufnimmt und als erwärmtes Wasser kontinuierlich daraus wieder abgeführt wird. Die sich dabei einstellende Temperatur hängt bei gegebener Kollektorfläche und Menge des strömenden Wassers von der Sonneneinstrahlung ab und liegt in der Regel deutlich unter 50 °C.

Ein Solarkollektor dieser Art ist in der DE 10 2005 061 008 B3 beschrieben. Der Solarkollektor weist eine aus zahlreichen parallel zueinander verlaufenden Kollektorrohren gebildete, mattenförmige Anordnung auf, die vom zu erwärmenden Wasser durchströmt wird. Die Kollektorrohre enden beiderseits in gemeinsamen Verteilerrohren. Über die Verteilerrohre wird das zu erwärmende Wasser dem Kollektor zugeführt, in den Kollektorrohren verteilt und daraus wieder abgeleitet. Verteilerrohre haben daher einen deutlich größeren Innendurchmesser als Kollektorrohre. Außerdem tragen die Verteilerrohre wegen ihrer Eigenschaft als seitliche Begrenzung der mattenförmigen Kollektor-Anordnung zur Formstabilisierung derselben bei und weisen in der Regel eine gewisse Biegesteifheit auf. Diese erleichtert zudem die Herstellung wasserdichter Verbindungen zu den Flüssigkeitszu- und -ableitungen, erschwert jedoch den Transport der Rohre. Daher werden die Verteilerrohre in der Regel aus kürzeren Einzelstücken zusammengesetzt, beispielsweise durch Verkleben. Sämtliche Rohre des bekannten Solarkollektors bestehen aus Kunststoff. Es hat sich auch gezeigt, dass die Frostbeständigkeit der bekannten Solarkollektoren unzureichend ist.

Eine andere Art von Solarabsorbern, die nicht Gegenstand der Erfindung sind, wird zur Wärmeerzeugung oder -rückgewinnung im Bereich der Brauchwassererwärmung und Wohnraumbeheizung eingesetzt. Dabei werden hohe Temperaturen in der Regel über 60 °C angestrebt, was durch eine diskontinuierliche Betriebsweise des Absorbers erreicht wird, indem Wasser oder ein anderer Wärmeträger innerhalb des Absorbers verbleibt und darin solange erhitzt wird, bis es die Soll-Temperatur erreicht hat. Ein derartiger Solarabsorber ist aus der DE 100 39 111 B4 bekannt. Er besteht aus Metall und setzt sich aus sogenannten Streifenabsorbern zusammen, die aus Kapillarrohren aus Kupfer bestehen, die mit einem Sammelrohr aus Edelstahl durch Löten verbunden sind. Zwecks Verbesserung der Frostbeständigkeit des Solarkollektors wird vorgeschlagen, das Sammelrohr mit Wellrohr-Profil auszubilden.

Das Einlöten der Kapillarrohre beim Lötprozess birgt das Risiko, dass die als Wellrohr ausgebildete und daher dünne Wandung des Sammelrohres beeinträchtigt oder sogar beschädigt wird. Insbesondere können die thermische Beaufschlagung und die mechanische Einwirkung durch das zusätzliche Lötmaterial den Verlauf von Kraftlinien ungünstig verändern und zu erhöhten mechanischen Spannungen im Bereich der Lötstelle führen. Zudem unterliegt das Sammelrohr durch Druck- und Temperaturschwankungen beim bestimmungsgemäßen Einsatz ständig Verformungen, die durch das Wellrohr-Profil des Verteilerrohres noch begünstigt werden. Andauernde Verformungen führen zur Ermüdung des Materials und schließlich zu Bruch oder Riss im Bereich der Lötverbindungen. Davon abgesehen, ist beim bekannten Solarkollektor die Dichtheit der Lötverbindung nachträglich zu überprüfen und seine Montage ist relativ aufwändig.

### Technische Aufgabe

Der vorliegenden Erfindung liegt die Aufgabe zugrunde, Solarkollektoren aus Kunststoff im Hinblick auf Montagefreundlichkeit, Frostbeständigkeit und Ermüdungsfestigkeit zu optimieren.

Diese Aufgabe wird ausgehend von einem Solarkollektor der eingangs genannten Gattung erfindungsgemäß dadurch gelöst, dass die Wandung mindestens eines der Verteilerrohre mit einem Wellprofil versehen ist, und dass die Rohranschlussstutzen integraler Bestandteil dieses Verteilerrohres sind.

Die bisher eingesetzten, biegesteifen Verteilerrohre haben eine glatte Außenwandung. Dadurch können an den Enden des Verteilerrohres flüssigkeitsdichte Anschlüsse für die Zu- und Ableitung der zu erwärmenden Flüssigkeit relativ einfach angebracht werden, wobei die glatte Zylindermantelfläche als Dichtfläche dient. Diese hält zudem einem radial nach Innen gerichteten Anpressdruck ohne weiteres stand.

Davon unterscheidet sich der erfindungsgemäße Solarkollektor dadurch, dass mindestens eines der Verteilerrohre, vorzugsweise mehrere, besonders bevorzugt alle Verteilerrohre des Solarkollektors, ein Wellprofil aufweisen, wie dies auch von Wellrohr bekannt ist.

Das Verteilerrohr mit Wellrohr-Profil zeichnet sich durch eine gewisse Flexibilität und durch eine hohe Gestaltsteifigkeit gegenüber Außendruck bei relativ geringer Wandstärke aus.

Das Verteilerrohr mit Wellrohrprofil kann in Stücken vorgegebener Länge bereitstehen oder das Verteilerrohr kann beispielsweise auch in Rollenform aufgewickelt sein, was die Lagerhaltung vereinfacht und den Transport zum Einsatzort erleichtert.

Es hat sich außerdem gezeigt, dass sich der Einsatz von Verteilerrohren mit Wellrohrprofil auch auf die Frostbeständigkeit des Solarkollektors vorteilhaft auswirkt. Dies kann darauf zurückgeführt werden, dass das Verteilerrohr infolge seines Wellrohrprofilierung elastisch und biegsam ist und dadurch der Ausdehnung des Eises folgen kann.

Weiterhin zeigt ein unter Einsatz flexibler Verteilerrohre aufgebauter, mattenähnlicher, flächiger Solarkollektor auch eine gewisse Biegsamkeit in Richtung der Matten-Normale. Die flächige Anordnung der Kollektorrohre kann sich daher Unebenheiten der Unterlage leicht anpassen. Als Beispiel seien gewölbte Flächen genannt, auf denen (Mauer) oder um die herum (Säulen, Türme) der Solarkollektor vollflächig aufliegen kann, was nicht nur aus ästhetischer Sicht vorteilhaft ist, sondern auch Beschädigungen nur lokal aufliegender Teile des Solarkollektors durch einwirkende Biegekräfte verhindert.

Über die Länge des Verteilerrohres sind Rohranschlussstutzen für den Anschluss der Kollektorrohre verteilt. Die Kollektorrohre werden beispielsweise auf die Rohranschlussstutzen aufgesteckt. Wichtig ist, dass Verteilerrohr und Rohranschlussstutzen einen integralen Verbund bilden, das heißt, sie sind aus einem Stück gefertigt. Die Rohranschlussstutzen sind mit der Außenwandung des Verteilerrohres integral verbunden und werden vorteilhafterweise im gleichen Arbeitsgang geformt. Als Beispiele hierfür seien ein kontinuierliches Extrusionsblasverfahren oder ein diskontinuierliches Blasformverfahren genannt.

Der integrale Verbund hat den Vorteil, dass der Aufwand für die nachträgliche Ausbildung einer formschlüssigen und dichten Verbindung zwischen Verteilerrohr und Rohranschluss (etwa durch Verschweißen von Kunststoffteilen) entfällt ebenso wie die in der Regel damit einhergehende thermische Belastung des Verteilerrohres. Eine Störung der bei der Herstellung des Verteilerrohres vorgegebenen Kraftlinienverläufe (mit eher geringen mechanischen Spannungen) durch ein nachträgliches Anbringen von Teilen wird vermieden, und damit auch die Ausbildung von Spannungsspitzen. Der integral angeformte Rohrstutzen trägt daher auch bei andauernden Verformungskräften zu einer geringeren Rissanfälligkeit bei.

Dabei hat es sich als vorteilhaft erwiesen, wenn die Rohranschlussstutzen mit einem Wellprofil versehen sind.

Die so ausgestalteten Rohranschlussstutzen zeigen eine gewisse Flexibilität, was sich wiederum auf die Frostbeständigkeit des Solarkollektors vorteilhaft auswirkt. Das Wellprofil des Rohranschlussstutzens gewährleistet einerseits eine hohe Beul- und Gestaltsteifigkeit bei vergleichsweise geringer Wandstärke, und sie die gewellte oder gerippte Oberfläche des Stutzens sichert das aufgeschobene Kollektorrohr gegen Abrutschen.

Es hat sich auch als besonders vorteilhaft erwiesen, wenn die Rohranschlussstutzen entlang einer ersten Längsseite der Verteilerrohr-Wandung angeordnet sind, und auf der der ersten Längsseite gegenüberliegenden zweiten Längsseite der Verteilerrohr-Wandung eine Vielzahl von Prägeelementen zur Formstabilisierung vorgesehen sind.

Bei den Prägeelementen handelt es sich um eine maschinell hergestellte Ausformungen im Bereich der Verteilerrohr-Wandung, die jeweils einem Rohranschlussstutzen ungefähr - im Idealfall genau - gegenüberliegen. In der Regel sind die Prägeelemente als ringförmige Vertiefungen oder Erhebungen mit den radialen Abmessungen des Rohranschlussstutzens ausgeformt. Die Prägeelemente bewirken einen Ausgleich mechanischer Spannungen, die infolge der nur einseitig in der Verteilerrohr-Wandung integrierten Rohranschlussstutzen erzeugt würden, und sie tragen so zu einer besseren Formbeständigkeit und Dichtigkeit des Solarkollektors bei. Darüber hinaus erhöhen sie die Steifigkeit des Wellrohres.

Im Idealfall liegt jedem Rohranschlussstutzen an der ersten Längsseite jeweils ein Prägeelement an der zweiten Längsseite der Verteilerrohr-Wandung exakt gegenüber. Abweichungen von diesem Idealfall führen in aller Regel zu höheren mechanischen Spannungen innerhalb des Verteilerrohres.

Weiterhin hat es sich als günstig erwiesen, wenn auch die Prägeelemente integraler Bestandteil des Verteilerrohres mit Wellprofil sind.

Die Prägeelemente und die Rohranschlussstutzen sind hierbei mit der Außenwandung des Verteilerrohres integral verbunden und werden im gleichen Arbeitsgang ausgeformt. Der integrale Verbund hat den Vorteil, dass der Aufwand für ein nachträgliches Erzeugen von Prägeelementen und die damit einhergehenden Störungen des Kraftlinienverlaufs in der Wandung des Verteilerrohrer vermieden werden.

Bei einer besonders vorteilhaften Ausführungsform des erfindungsgemäßen Solarkollektors ist das Verteilerrohr einstückig ausgebildet.

Die einstückige Ausbildung des mindestens einen Verteilerrohres wird durch sein Wellprofil erleichtert. Denn durch die Flexibilität des "Wellrohres" kann dieses in aufgewickelter Form zur Verfügung gestellt werden, wie dies auch für die Kollektorrohre bereits üblich ist. Ein Teilstück der durch die spezifischen Gegebenheiten vorgegebenen Länge des Verteilerrohres wird quasi "von der Rolle" abgeschnitten. Ein Verteilerrohr auf Rolle kann daher "vor Ort" in größerer Länge zur Verfügung stehen, als dies bei bisher gestückelten Verteilerrohr-Längen üblich war. So kann die Länge des flexiblen Verteilerrohres unmittelbar den spezifischen Gegebenheiten angepasst werden und die bisher notwendigen Arbeiten zum flüssigkeitsdichten Verkleben von Teilstücken des Verteilerrohres entfallen. Der Montageaufwand ist geringer.

Damit einhergehend können Lücken oder Unterbrechungen in der mattenförmigen Anordnung der Kollektorrohre vermieden werden, wie sie ansonsten bei Einsatz der traditionellen, biegesteifen Verteilerrohre im Bereich der Verbindungsstellen von Teilstücken stets vorhanden waren.

Es hat sich außerdem bewährt, wenn die Kollektorrohre als Wellrohre ausgebildet sind, die über ihre Länge gleichmäßig verteilte Markierungsbereiche mit vermindertem Außendurchmesser aufweisen.

Kollektorrohre sind häufig in Form von Wellrohren ausgeführt, und sie werden bei der Montage des Solarkollektors nach Bedarf von der Rolle abgeschnitten. Ergänzend dazu zeigen die Kollektorrohre gemäß der Erfindung über ihre Länge gleichmäßig verteilte Markierungsbereiche. Die Markierungsbereiche sind in einem konstanten Abstand voneinander - beispielsweise alle 50 cm - über die Länge des Kollektorrohres verteilt, und sie sind optisch durch einen verminderten Außendurchmesser erkennbar. Zusätzlich können auch Markierungen anderer Art vorgesehen sein, wie etwa Markierungen durch Farbe oder Prägung der Oberfläche. Eine Funktion der Markierungsbereiche besteht darin, dass sie das Abmessen der Rohrlänge beim Zurechtschneiden erleichtern.

Außerdem können sie zur Stabilisierung der mattenförmigen Anordnung der Kollektorrohre herangezogen werden, sofern diese parallel zueinander angeordnet sind und ihre Markierungsbereiche in einer geraden Linie oder in mehreren geraden Linien liegen. Denn in diesem Fall ist es leicht möglich, entlang der Linie oder der Linien der Markierungsbereiche ein oder mehrere Stabilisierungsprofile anzuordnen, die mit den Markierungsbereichen zusammenwirken. Hierzu weist jedes Stabilisierungsprofil über seine Länge mehrere offene, halbkreisförmige Aufnahmen für die Kollektorrohre auf. Die Größe der Aufnahmen ist dabei auf dem verminderten Außendurchmesser der Markierungsbereiche ausgelegt. Die Kollektorrohre werden so - mittels ihrer Markierungsbereiche - in einem oder in mehreren Stabilisierungsprofilen fixiert. Eine Verschiebung in Längsachsenrichtung ist danach nur im Umfang der Länge des Markierungsbereiches möglich. Dadurch wird ein übermäßiges Verziehen der mattenförmigen Anordnung - etwa durch mechanische Einwirkungen oder durch Unterschiede in der thermischen Ausdehnung zwischen Tag und Nacht, die sogar zu einem allmählichen "Wegwandern" des Solarkollektors führen können - vermindert, und so eine gewisse Formstabilität der Anordnung erreicht. Andererseits wird die erforderliche Flexibilität zum Ausgleich von Wärmedehnungen beibehalten.

In dem Zusammenhang hat es sich besonders bewährt, wenn die Markierungsbereiche als Wandungsbereiche mit feinerer Wellenform und dickerer Wandstärke ausgebildet sind.

Das Kollektorrohr zeigt in seinen Markierungsbereichen eine feinere Wellenform - im Folgenden auch als "Feinwelle" oder "feinwellig" bezeichnet - und ansonsten eine gröbere Wellenform, was im Folgenden auch als "Grobwelle" oder "grobwellig" bezeichnet wird. Die feinwelligen Bereiche sind optisch leicht erkennbar und sie zeichnen sich durch eine vergleichsweise größere Wandstärke und damit durch eine höhere mechanische Stabilität aus. Dies vermindert die Gefahr einer mechanischen Beschädigung, wenn an diesen Bereichen eine Fixierung angreift, wie beispielsweise durch Einclipsen in Aufnahmen eines Stabilisierungsprofils, wie oben beschrieben.

Bei einer bevorzugten Ausführungsform des erfindungsgemäßen Solarkollektors ist dem Verteilerrohr ein biegesteifes Formprofil zugeordnet, das in einem Parallelabstand von weniger als 50 cm zum Verteilerrohr verläuft, und das über seine Länge offene Aufnahmen für eine Klipsverbindung mit den Kollektorrohren aufweist.

Das Verteilerrohr oder die Verteilerrohre des erfindungsgemäßen Solarkollektors zeigen infolge ihrer Ausbildung mit Wellprofil eine gewisse Flexibilität und tragen somit zur Formstabilität der mattenförmigen Anordnung der Kollektorrohre weniger bei als die traditionellen, biegesteifen Gattrohre. Zum Ausgleich dessen wird vorzugsweise jedem flexiblen Verteilerrohr ein biegesteifes Formprofil zugeordnet. Das Formprofil verläuft parallel und in einem geringen Abstand zum jeweiligen Verteilerrohr und trägt so zur Formstabilisierung der Kollektorrohr-Anordnung bei. Es zeigt - in der Regel nach oben - offene, halbkreisförmige Ausnehmungen zur Aufnahme der Kollektorrohre. Der Durchmesser der Ausnehmungen ist an den Durchmesser der Kollektorrohre angepasst.

Über die Länge der Kollektorrohre können mehrere derartiger Formprofile vorgesehen sein, wobei diese dann als "Stabilisierungsprofile" im oben erläuterten Sinne dienen.

Weiterhin hat es sich als günstig erwiesen, wenn mindestens ein Ende des Verteilerrohres mit einem Anschlusselement verbunden ist, welches an einem Dichtring, der in einem Wellental des Verteilerrohr-Wellprofils einliegt, dichtend anliegt.

Die Enden des Verteilerrohres sind entweder verschlossen oder sie sind mit einer Zu- oder Ableitung für die zu erwärmende Flüssigkeit versehen. Die Verbindung mit einer Zu- oder Ableitung erfolgt über ein Anschlusselement, wie beispielsweise einer Muffe oder einem Winkelstück, das die Verteilerrohr-Mantelfläche umgreift, und dabei an einem Dichtring anliegt. Der Dichtring ist erfindungsgemäß in ein Wellental (eine Rille) des Wellprofils eingelegt. Das Wellprofil dient somit zur Erhöhung der Flexibilität des Verteilerrohres und es stellt gleichzeitig eine Dichtfläche und die Fixierung für einen Dichtring zur Verfügung.

In dem Zusammenhang hat es sich besonders bewährt, wenn das Anschlusselement ein den Dichtring übergreifendes Ende aufweist, das mit mindestens einem radial nach innen ragenden Haltezapfen versehen ist, der in ein Wellental des Verteilerrohr-Wellprofils eingreift.

Der radial nach innen ragende Haltezapfen des Anschlusselements greift in eine Rille des Wellprofils ein; im einfachsten Fall in die zum einliegenden Dichtring benachbarte Rille. Dies setzt eine gewisse radiale Beweglichkeit des Haltezapfens voraus, die beispielsweise dadurch erreicht wird, dass das freie Ende des Anschlusselements geschlitzt ausgeführt ist, so dass sich die mit dem Haltezapfen versehenen Schlitzfahnen mittels einer Überwurfmutter oder einer Schlauchschelle nach Innen in die Rille des Wellrohres drücken lassen.

Vorzugsweise bestehen die Verteilerrohre und die Kollektorrohre aus dem gleichen Kunststoff.

Fügeverbindungen der Bauteile miteinander zeigen wegen des jeweils gleichen thermischen Ausdehnungskoeffizienten geringe Dichtungs- und Alterungsprobleme, was sich auch im Hinblick auf eine gute Frostbeständigkeit bemerkbar macht.

Bei einer bevorzugten Ausführungsform des erfindungsgemäßen Solarkollektors weist das Verteilerrohr eine lichte Weite im Bereich von 40 mm bis 75 mm auf.

### Ausführungsbeispiel

Nachfolgend wird die Erfindung anhand von Ausführungsbeispielen und einer Zeichnung näher erläutert. Dabei zeigt in schematischer Darstellung im Einzelnen:
- **Figur 1**: eine Ausführungsform eines erfindungsgemäßen Solarkollektors zum Erwärmen des Badewassers eines Swimmingpools in einer Draufsicht auf die Absorbermatte,
- **Figur 2**: einen radialen Schnitt durch ein Verteilerrohr mit Wellprofil gemäß der Erfindung,
- **Figur 3**: eine Draufsicht auf die Unterseite des Verteilerrohres gemäß Figur 2,
- **Figur 4**: einen Längenabschnitt des Verteilerrohres gemäß Figur 2 mit meh- reren Rohranschluss in einem Längsschnitt,
- **Figur 5**: eine alternative Ausführungsform eines Rohranschlusses mit einem flexiblen Wellprofil und Spreizdübelmechanismus, und
- **Figur 6**: einen Längenabschnitt einer bevorzugten Ausführungsform eines Kollektorrohres im Längsschnitt.

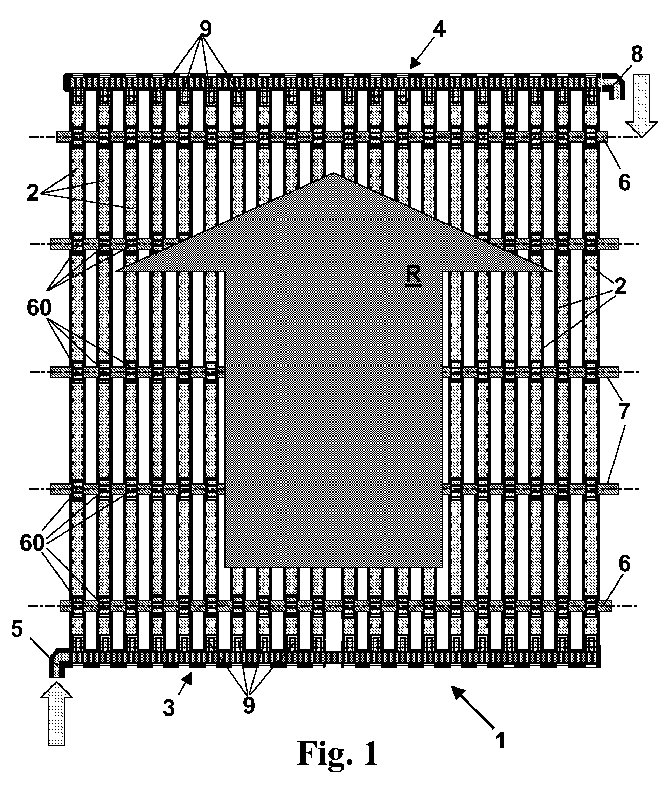

Der in **Figur 1** dargestellte Solarkollektor ist in Form eines Diagonal-Absorbers für den Einsatz mit einem Swimmingpool nach dem so genannten Tichelmann-Prinzip ausgeführt. Die Absorber-Matte 1 besteht im Wesentlichen aus zwei stirnseitig angeordneten Verteilerrohren 3, 4, die über eine Vielzahl paralleler zueinander verlaufender Kollektorrohre 2 miteinander verbunden sind. Die Kollektorrohre 2 und die Verteilerrohre 3, 4 bestehen aus Polypropylen, das gegenüber UV-Strahlung stabilisiert und gegenüber chlorhaltigem Wasser resistent ist.

Das zu erwärmende Wasser gelangt über den Einlauf 5 in die Verteiler-Zuleitung 3, die sich über die gesamte Einlassseite der Absorber-Matte 1 erstreckt. Die andere Seite der Verteiler-Zuleitung 3 ist verschlossen. Das zu erwärmende Wasser verteilt sich annähernd gleichmäßig in den Kollektorrohren 2, durchströmt diese unter Wärmeaufnahme in der durch den Richtungspfeil "R" angezeigten Richtung und tritt auf der gegenüberliegenden Auslassseite in die Verteiler-Ableitung 4 ein, von wo es über den Auslass 8 wieder aus der Absorbermatte 1 austritt und in einen (in der Figur nicht dargestellten) Swimmingpool gelangt. Das gegenüberliegende Ende der Verteiler-Ableitung 4 ist verschlossen

Die Verteiler-Zuleitung 3 und die Verteiler-Ableitung 4 werden im Folgenden auch kurz als "Verteilerrohre" bezeichnet. Bei den bekannten Solarkollektoren dieser Art bestehen die Verteilerrohre 3, 4 aus einem biegesteifen Glattrohr, das der mattenförmigen Anordnung 1 eine gewisse mechanische Stabilität verleiht.

Im Unterschied dazu werden beim Solarkollektor gemäß vorliegender Erfindung Verteilerrohre 3, 4 eingesetzt, deren Wandung mit einem Wellprofil versehen ist. Die Verteilerrohre 3, 4 werden mittels eines Extrusionsblasverfahrens aus dem gleichen Polypropylen-Kunststoff gefertigt wie die Kollektorrohre 2, sie haben jedoch eine deutlich größere lichte Weite. Beim Extrudieren werden in regelmäßigen Rohranschlussstutzen 11 und jedem Rohranschlussstutzen 11 genau gegenüberliegend eine so genannte Sicke 10 in der Wandung des Verteilerrohres 3, 4 ausgeformt.

Das Wellprofil, welches sowohl auf der Außen- als auch auf der Innenwandung der Verteilerrohre 3, 4 vorgesehen ist, verleiht den Verteilerrohren 3, 4 eine gewisse Flexibilität.

Die flexiblen Verteilerrohre 3, 4 werden als Rolle gewickelt vor Ort gebracht und - ebenso wie die Kollektorrohre 2 - dort auf die vorgegebene Länge zugeschnitten. Die Ausführung der Verteilerrohre 3, 4 aus "Wellrohr" erleichtert den Transport und die Montage und die Flexibilität des Wellrohres gewährleistet eine hohe Frostbeständigkeit des Kollektors insgesamt.

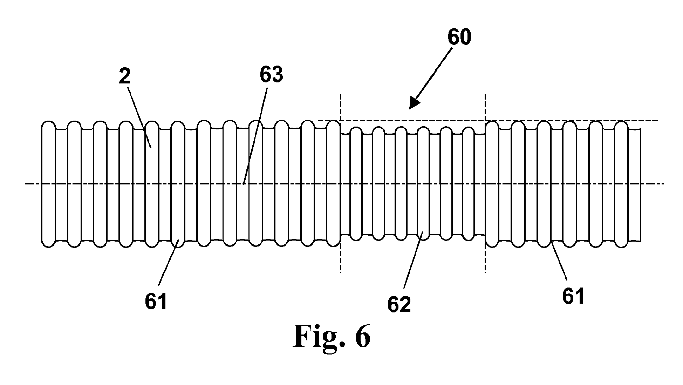

Zur Formstabilisierung sind auf beiden Stirnseiten der Absorbermatte 1 jeweils in einem Abstand von etwa 30 cm von den Verteilerrohren 3, 4 biegesteife Formprofile 6 vorgesehen. Die beidseitigen Formprofile 6 erstrecken sich über die gesamte Breite der Absorbermatte 1, und sie verlaufen parallel zu den Verteilerrohren 3, 4. Sie weisen nach oben offene, halbkreisförmige Ausnehmungen auf, in denen die Kollektorrohre 2 mittels lösbarer Klipsverbindung gehalten werden. Die Kollektorrohre 2 weisen im betreffenden Haltebereich (dieser entspricht dem Markierungsbereich 60, siehe auch Figur 6) einen geringeren Außendurchmesser und eine höhere Wandstärke auf, und sie sind mit einem feineren Wellprofil versehen und dadurch leicht zu erkennen.

Ähnliche Halteprofile 7 sind über die Länge der Absorbermatte 1 in einem Abstand von 50 cm gleichmäßig verteilt, wobei die Kollektorrohre 2 jeweils mit ihren Markierungsbereichen 60 der in Ausnehmungen der Halteprofile 7 eingeclipst sind. Diese Halteprofile 7 werden weiter unten im Zusammenhang mit einer beispielhaften Beschreibung bevorzugter Kollektorrohre 2 anhand Figur 6 noch näher erläutert.

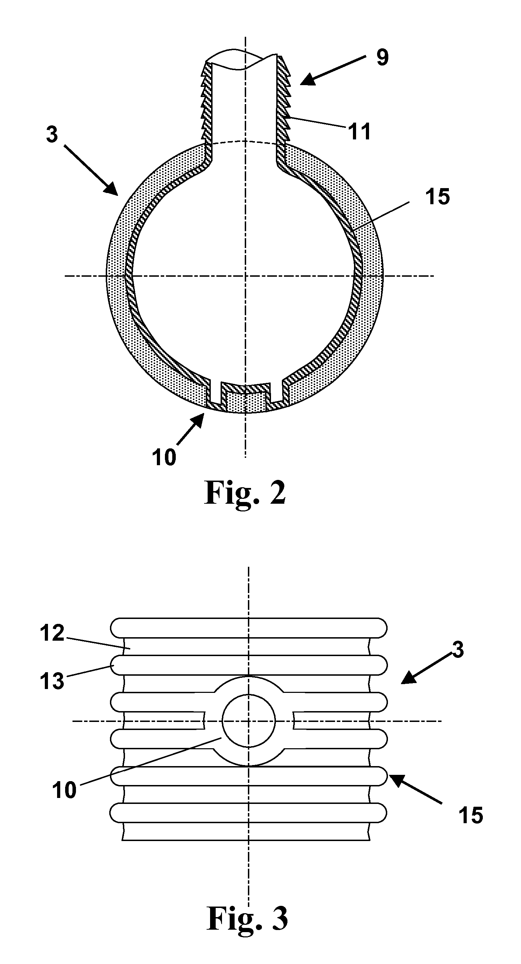

Details und vorteilhafte Ausführungsformen der Verteilerrohre 3, 4 sind am Beispiel des Verteilerrohres 3 in den Figuren 2 bis 4 dargestellt.

**Figur 2** zeigt einen radialen Schnitt durch das Verteilerrohr 3. Die lichte Weite des Verteilerrohres 3 beträgt 40 mm, der Außendurchmesser 50 mm und die Wandstärke liegt bei etwa 1 mm. Die Verteilerrohr-Wandung 15 ist Innen wie Außen mit einem Wellprofil versehen. In das Verteilerrohr 3 münden im gleichen Abstand voneinander gerippte Rohranschlussstutzen 11 eines Rohranschlusses 9.

Die Rohranschlussstutzen 11 sind auf einer gemeinsamen Längsseite der Verteilerrohr-Wandung 15 vorgesehen und auf der gegenüberliegenden Längsseite der Verteilerrohr-Wandung 15 und jedem Rohranschlussstutzen 11 jeweils genau gegenüberliegend ist eine so genannte Sicke 10 vorgesehen, die **Figur 3** in einer Draufsicht zeigt.

Die Sicke 10 trägt zur Spannungskompensation und zur Versteifung des Verteilerrohres 3 bei. Sie ist als kreisrunde Erhöhung mit etwa den radialen Abmessungen des Rohranschlussstutzens 11 ausgeführt. Sicke 10 und Rohranschlussstutzen 11 werden in einem kontinuierlichen Extrusions-Blasverfahren unmittelbar beim Extrudieren des Verteilerrohrstrangs 3 ausgeformt und bilden einen integralen Bestandteil desselben. Aus Figur 3 ist auch die Ausgestaltung der Verteilerrohr-Wandung 15 mit einem Wellprofil gut zu erkennen. Mit der Bezugsziffer 12 ist ein "Wellental" des Wellprofils, und mit der Bezugsziffer 13 ist ein "Wellenberg" bezeichnet. Eine preiswertere Herstellung des Verteilerrohres 3 erfolgt mittels eines diskontinuierlichen Blasformverfahrens, wobei jedoch nur Rohrstücke mit einer der Blasform entsprechenden Länge herstellbar sind.

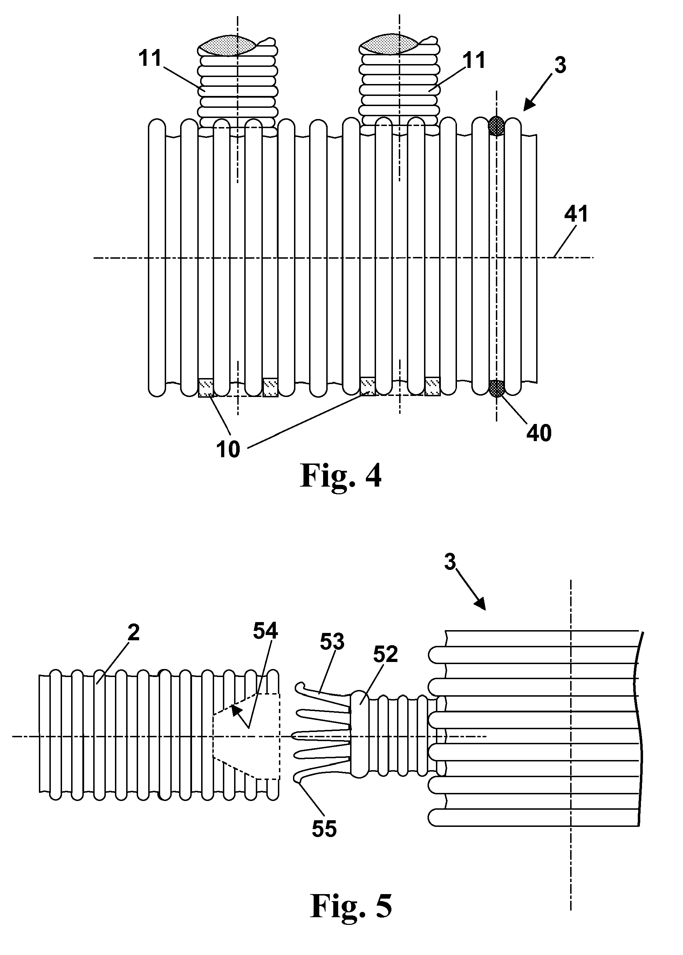

Aus dem Längsschnitt gemäß **Figur 4** ist erkennbar, dass die Wandung des Verteilerrohres 7 mit mehreren Rohranschlussstutzen 11 versehen ist, die einen Mittenabstand von etwa 35 mm voneinander haben. Die Position der Rohranschlussstutzen 11 und ihr Außendurchmesser sind so gewählt, dass in axialer Richtung gesehen stets genau drei Wellentäler 12 des Wellprofils von einem Rohranschlussstutzen 11 überdeckt werden und dazwischen jeweils drei Wellenberge 13 frei bleiben. Der Mittenabstand der Wellenberge liegt bei 5 mm.

Die Anschlussstutzen 11 der Rohranschlüsse 9 sind ebenfalls mit einem Wellprofil versehen, das diesen eine gewisse Flexibilität verleiht und gleichzeitig einem Abrutschen des aufgeschobenen Kollektorrohres 2 entgegenwirkt.

Der Anschluss einer Zu- oder Ableitung für das zu erwärmende Wasser erfolgt stets über die Verteilerrohre 3, 4. Hierzu sind die betreffenden Enden des Verteilerrohres 6, 8 mit den hülsenförmigen (in der Figur 1 dargestellten) Anschlusselementen versehen, welche beispielsweise als Muffe oder Winkelstück ausgeführt sind. Das Anschlusselement umgreift die Mantelfläche des Verteilerrohres 3, 4 und liegt dabei mit seiner Innenwandung an einem Dichtring 40 an, der in das vorderste "Wellental" 12 des Wellprofils eingelegt ist. Das äußerste freie Ende des Anschlusselements weist um seinen Umfang gleichmäßig verteilte, kurze Längsschlitze auf, so dass die so erzeugten streifenförmigen Schlitzfahnen elastisch nach Innen - in Richtung auf die Längsachse 41 der Verteilerrohres 3, 4 umgebogen werden können. Die Schlitzfahnen sind auf ihrer Innenseite mit Haltezapfen versehen, die bei der Biegung nach Innen in ein hinteres Wellental des Verteilerrohr-Wellprofils eingreifen.

In **Figur 5** ist eine bevorzugte Ausführungsform eines Rohranschlusses 50 dargestellt, bei der der Anschlussstutzen 51 ebenfalls mit einem flexiblen Wellprofil ausgebildet ist. Die dadurch gewonnene Flexibilität trägt zur Verbesserung der Frostbeständigkeit des Solarkollektors 1 bei und verhindert ein Abrutschen des Kollektorrohres 2, wie bereits weiter oben erläutert.

Außerdem ist das freie Ende des Rohranschlussstutzens 51 mit einer dünnwandigen, leicht verformbaren Verdickung 52 versehen, die in eine Vielzahl von Spreizfahnen 53 übergeht, deren Enden mit wulstartigen Kuppen 55 versehen sind. Zur Herstellung einer dichten Verbindung zwischen Rohranschluss 50 und einem Kollektorrohr 2 wird dieses über den Außenmantel des Anschlussstutzens 51 geschoben. Dabei wird ein axialer Anpressdruck auf die Verdickung 52 ausgeübt, der dazu führt, dass sich die Spreizfahnen 53 nach Außen, gegen die Innenwandung 54 des Kollektorrohres 2, aufspreizen und sich die Kuppen 55 in das rillenförmige Innenprofil des Kollektorrohres 2 einlegen und sich darin verhaken. Die Spreizfahnen 53 verhindern so ein unbeabsichtigtes Lösen der Verbindung. Dadurch kann der Rohranschlussstutzen 51 außerdem mit vergleichsweise kurzer Länge ausgeführt werden, was die Montage des Solarkollektors erleichtert und beschleunigt.

Die Spreizung der Spreizfahnen 53 ist vorzugsweise reversibel und kann durch Wegnehmen des Drucks von der Verdickung 52 oder durch Aufbringen eines Gegendrucks beseitigt, und das Kollektorrohr 2 daraufhin wieder abgezogen werden.

Im Folgenden werden weitere Details und bevorzugte Ausführungsformen der Kollektorrohre 2 näher erläutert.

**Figur 6** zeigt einen Längsschnitt einer bevorzugten Ausführungsform eines Kollektorrohres 2 zum Einsatz in einem Solarkollektor gemäß der Erfindung. Das Kollektorrohr 2 ist als Wellrohr ausgeführt, und es wird bei der Montage des Solarkollektors vor Ort nach Bedarf von der Rolle abgelängt. Um dies zu erleichtern, ist das Kollektorrohr 2 mit Markierungsbereichen 60 versehen, die in einem konstanten Mittenabstand von 50 cm voneinander über die gesamte Länge der Kollektorrohres 2 verteilt sind. Die Markierungsbereiche 60 sind optisch von den übrigen Bereichen durch ein Wellprofil erkennbar, das über eine Länge von etwa 1 cm als Feinprofil 62 ausgeführt ist. Die "Wellenberge" sind im Bereich des Feinprofils 62 3 mm voneinander entfernt (im Gegensatz zu 5 mm beim Grobprofil 61 in den übrigen Bereichen). Die optisch erkennbare Längenmarkierung erleichtert die Montage und vermindert den Verschnitt.

Die Markierungsbereiche 60 werden außerdem in Verbindung mit den Halteprofilen 7 (siehe Figur 1) zur Formstabilisierung der Absorbermatte 1 herangezogen. Zu diesem Zweck weist das Kollektorrohr 2 m Bereich der Feinwelle 62 einen geringeren Außendurchmesser von 20 mm und eine höhere Wandstärke von 1 mm auf, im Vergleich zu den Bereichen der Grobwelle 61 mit einem Außendurchmesser von 25 mm und einer Wandstärke von 0,8 mm. Die Bereiche der Feinwelle 62 zeichnen sich somit durch einen geringeren Außendurchmesser, jedoch durch eine vergleichsweise größere Wandstärke und durch eine höhere mechanische Stabilität aus.

Innerhalb der Absorbermatte 1 werden die Kollektorrohre 2 so angeordnet, dass ihre Markierungsbereiche 60 jeweils in geraden Linien parallel zu den Verteilerohren 3, 4 verlaufen. Entlang dieser Linien sind die Halteprofile 7 - in einem Abstand von 50 cm - entsprechend dem Abstand der Markierungsbereiche 60 voneinander - angeordnet.

Die Halteprofile 7 sind in einem Abstand, der dem Montageabstand der Kollektorrohre 2 entspricht, mit halbkreisförmigen Ausnehmungen versehen, in welche die Kollektorrohre 2 mit ihren Feinwellen- oder Markierungsbereichen 60 eingeclipst werden. Die Kollektorrohre 2 werden so in den Halteprofilen 7 zusätzlich fixiert, wobei aber eine gewisse Verschiebung in Richtung der Längsachse 63 möglich bleibt. Dies trägt zur Formstabilität der Absorbermatte 1 bei, und gleichzeitig wird eine gewisse Flexibilität zum Ausgleich von Wärmedehnungen beibehalten. Insbesondere wird ein allmähliches Abgleiten der Absorbermatte 1 vermieden, das ansonsten bei geneigten Auflageflächen beobachtet wird, und das auf das sukzessive Ausdehnen und Zusammenziehen der Kollektorrohre 2 zurückzuführen ist.

## Patentansprüche

1. Solarkollektor zum Erwärmen einer Flüssigkeit, umfassend mindestens zwei Verteilerrohre aus Kunststoff (3, 4) zur Zu- und Ableitung der zu erwärmenden Flüssigkeit, die jeweils eine Verteilerrohr-Wandung (15) aufweisen, über deren Länge eine Vielzahl von Rohranschlussstutzen (11) aus Kunststoff für den Anschluss von Kollektorrohren (2) verteilt sind, welche die Verteilerrohre (3, 4) miteinander verbinden, **dadurch gekennzeichnet, dass** die Wandung (15) mindestens eines der Verteilerrohre (3, 4) mit einem Wellprofil versehen ist, und dass die Rohranschlussstutzen (11) integraler Bestandteil dieses Verteilerrohres (3; 4) sind.

2. Solarkollektor nach Anspruch 1, **dadurch gekennzeichnet, dass** die Rohranschlussstutzen (11) mit einem Wellprofil versehen sind.

3. Solarkollektor nach Anspruch 1 oder 2, **dadurch gekennzeichnet, dass** die Rohranschlussstutzen (11) entlang einer ersten Längsseite der Verteilerrohr-Wandung (15) angeordnet sind, und dass auf der der ersten Längsseite gegenüberliegenden zweiten Längsseite der Verteilerrohr-Wandung (15) eine Vielzahl von Prägeelementen (10) zur Formstabilisierung vorgesehen sind.

4. Solarkollektor nach Anspruch 3, **dadurch gekennzeichnet, dass** jedem Rohranschlussstutzen (11) an der ersten Längsseite jeweils ein Prägeelement (10) an der zweiten Längsseite der Verteilerrohr-Wandung gegenüberliegt.

5. Solarkollektor nach Anspruch 3 oder 4, **dadurch gekennzeichnet, dass** die Prägeelemente (10) integraler Bestandteil des Verteilerrohres (3; 4) mit Wellprofil sind.

6. Solarkollektor nach einem der vorhergehenden Ansprüche, **dadurch gekennzeichnet, dass** das Verteilerrohr (3, 4) einstückig ausgebildet ist.

7. Solarkollektor nach einem der vorhergehenden Ansprüche, **dadurch gekennzeichnet, dass** die Kollektorrohre (2) als Wellrohre ausgebildet sind, die über ihre Länge gleichmäßig verteilte Markierungsbereiche (60) mit vermindertem Außendurchmesser aufweisen.

8. Solarkollektor nach Anspruch 7, **dadurch gekennzeichnet, dass** die Markierungsbereiche (60) als Wandungsbereiche mit feinerem Wellprofil und dikkerer Wandstärke ausgebildet sind.

9. Solarkollektor nach einem der vorhergehenden Ansprüche, **dadurch gekennzeichnet, dass** dem Verteilerrohr (3, 4) ein biegesteifes Formprofil (6) zugeordnet ist, das in einem Parallelabstand von weniger als 50 cm zum Verteilerrohr (3, 4) verläuft, und das über seine Länge offene Aufnahmen für eine Klipsverbindung mit den Kollektorrohren (2) aufweist.

10. Solarkollektor nach einem der vorhergehenden Ansprüche, **dadurch gekennzeichnet, dass** mindestens ein Ende des Verteilerrohres (3, 4) mit einem Anschlusselement verbunden ist, welches an einem Dichtring (40), der in einem Wellental (12) des Verteilerrohr-Wellprofils einliegt, dichtend anliegt.

11. Solarkollektor nach Anspruch 10, **dadurch gekennzeichnet, dass** das Anschlusselement ein den Dichtring (40) übergreifendes Ende aufweist, das mit mindestens einem radial nach innen ragenden Haltezapfen versehen ist, der in ein Wellental des Verteilerrohr-Wellprofils eingreift.

12. Solarkollektor nach einem der vorhergehenden Ansprüche, **dadurch gekennzeichnet, dass** die Verteilerrohre (3, 4) und die Kollektorrohre (2) aus dem gleichen Kunststoff bestehen.

13. Solarkollektor nach einem der vorhergehenden Ansprüche, **dadurch gekennzeichnet, dass** das Verteilerrohr (3, 4) eine lichte Weite im Bereich von 40 mm bis 75 mm aufweist.
